# EUROPÄISCHE PATENTSCHRIFT

(11) **EP 0 869 044 B1**
(45) Veröffentlichungstag und Bekanntmachung des Hinweises auf die Patenterteilung: **01.09.2004**
(21) Anmeldenummer: 98105718.5
(22) Anmeldetag: 30.03.1998
(51) Int. Cl.: B60S 1/08

(54) **Optoelektronische Sensoreinrichtung**
Optoelectronic sensor device
Dispositif détecteur optoélectronique

(30) Priorität: 02.04.1997 DE 19713910
(43) Veröffentlichungstag der Anmeldung: 07.10.1998
(73) Patentinhaber: Leopold Kostal GmbH & Co. KG, 58507 Lüdenscheid (DE)
(72) Erfinder: Kerkmann, Detlef, Dr., 58769 Nachrodt (DE); Böbel, Ralf, 44269 Dortmund (DE); Esders, Berthold, 58579 Schalksmühle (DE)

(56) Entgegenhaltungen:
- EP-A- 0 655 619
- DE-A- 4 406 398
- DE-A- 4 410 217
- DE-C- 3 823 300

## Beschreibung

Die Erfindung betrifft eine optoelektronische Sensoreinrichtung zur Erfassung des auf der äußeren Oberfläche einer transparenten Kraftfahrzeug-Scheibe vorhandenen Niederschlags, wobei an die innere Oberfläche der Scheibe ein etwa quaderförmiger Strahlenleitkörper mit seiner vorderen Oberfläche ankoppelbar ist, dem ein Strahlensender und ein Strahlenempfänger zugeordnet sind, die auf einem plattenförmigen Substrat angeordnet sind, welches sich im Bereich der von der Scheibe abgewandten hinteren Oberfläche des Strahlenleitkörpers parallel zur inneren Oberfläche der Scheibe erstreckt.

In dem Srahlenleitkörper wird ein Parallelstrahlenbündel weitergeleitet, das an der äußeren Oberfläche der Kraftfahrzeugscheibe, normalerweise der Frontscheibe des Kraftfahrzeugs totalreflektiert wird. Der Reflexionsanteil wird durch die Benetzung der Scheibe beeinflußt, so daß durch entsprechende Auswertung der Benetzungsgrad der Scheibe ermittelt werden kann. Zur Bildung und Verarbeitung des Parallelstrahlenbündels ist ein Parallelisierungsteil des Strahlensenders und ein Fokussierungsteil des Strahlenempfängers notwendig, Der Parallelisierungsteil und Fokussierungsteil benötigen eine erhebliche Baulänge zusätzlich zu dem Strahlenleitkörper.

Eine gattungsgemämässe Sensoreinrichtung ist aus DE-A-3 823 300 bekannt.

Aufgabe der Erfindung ist die Reduzierung der optischen Bauteile, die Verringerung der Baulänge und die Verbesserung der optischen Eigenschaften der Sensoreinrichtung.

Diese Aufgabe wird nach der Erfindung dadurch gelöst, daß in dem Strahlenleitkörper von der hinteren Oberfläche desselben ausgehende Ausnehmungen zur Aufnahme einerseits des Strahlensenders und andererseits des Strahlenempfängers vorgesehen sind und daß zwei sich gegenüberliegende, zumindest partiell verspiegelte Seitenflächen des Strahlenleitkörpers derart ausgebildet und jeweils so auf eine der Ausnehmungen ausgerichtet sind, daß das vom Strahlensender ausgehende, über die der Ausnehmung zugehörige Strahleneintrittsfläche in den Strahlenleitkörper eintretende divergente Strahlenbündel an dem Spiegelbereich der zugehörigen Seitenfläche reflektiert und parallelisiert sowie in die Scheibe unter einem Winkel von etwa 45° eingekoppelt wird und daß das an der äußeren Oberfläche der Scheibe reflektierte Strahlenbündel an dem Spiegelbereich der anderen Seitenfläche wiederum reflektiert und konvergierend über die der anderen Ausnehmung zugehörige Strahlenaustrittsfläche dem Strahlenempfänger zugeführt wird.

Die Erfindung unterscheidet sich insofern vom Stand der Technik, als die Erzeugung und Fokussierung des Paralleistrahlenbündels in dem Strahlenleitkörper selbst erfolgt. Das divergente Lichtbündel des Strahlensenders, insbesondere eines Infrarotsenders wird direkt in den Strahlenleitkörper eingestrahlt. Das aus dem Strahlenleitkörper austretende konvergente Lichtbündel ist auf dem Strahlenempfänger, insbesondere einem Infrarotempfänger fokussiert. Somit entfällt ein gesonderter Parallelisierungsteil und Fokussierungsteil. Die Abmessungen des Sensoreinrichtung lassen sich weitgehend verkleinern. Dieses erlaubt eine Komprimierung der Anordnung.

Eine einwandfreie optische Abbildung wird dadurch erzielt, daß die Spiegelbereiche der beiden Seitenflächen parabolförmig ausgebildet sind.

Der Strahlengang läßt sich dadurch komprimieren, daß die parabolförmigen Spiegelbereiche sich jeweils an einen von der vorderen Oberfläche des Strahlenleitkörpers ausgehenden, senkrecht dazu verlaufenden Seitenflächenabschnitt der Seitenflächen anschließen und bis zu der parallel zur inneren Oberfläche der Scheibe verlaufenden hinteren Oberfläche des Strahlenleitkörpers reichen.

Eine günstige Anordnung der Lichtwege innerhalb des Strahlenleitkörpers wird dadurch erreicht, daß jeweils die in jeder Ausnehmung vorhandene Strahleneintrittsfläche bzw. Strahlenaustrittsfläche senkrecht zu der vorderen Oberfläche des Strahlenleitkörpers ausgerichtet ist.

Eine kompakte Ankoppelung von Strahlensender und Strahlenempfängeran den Strahlenleitkörpers wird dadurch sichergestellt, daß die Abstrahlfläche des Strahlensenders bzw. die Empfangsfläche des Strahlenempfängers direkt auf die jeder Ausnehmung zugehörige Strahleneintrittsfläche bzw. Strahlenaustrittsfläche ausgerichtet sind.

Eine parallele Ausrichtung der Abstrahlflächen von Strahlensender und Strahlenempfänger wird dadurch möglich, daß die Abstrahlfläche des Strahlensenders bzw. die Empfangsfläche des Strahlenempfängers auf jeweils eine unter einem Winkel von 45° gegenüber der betreffenden Fläche verlaufende und auch unter einem Winkel von 45° gegenüber der der jeweiligen Ausnehmung zugehörigen Strahleneintrittsfläche bzw. Strahlenaustrittsfläche ausgerichtete, verspiegelte Grundzone der jeweiligen Ausnehmung ausgerichtet sind.

Der schaltungsmäßige Aufbau wird dadurch komprimiert, daß der Strahlensender und der Strahlenempfänger als SMD-Teile ausgeführt sind und auf dem Substrat in einem auf die Ausnehmungen abgestimmten Verhältnis vorgesehen bzw. entsprechend angeordnet sind.

Eine raionelle Technik des Elektronikaufbaus wird dadurch gesichert, daß das Substrat als metallkaschierte Leiterplatte ausgeführt ist.

Eine kompakte Ausrichtung wird dadurch gewährleistet, daß die Leiterplatte am Strahlenleitkörper durch zugeordnete Bauelemente form- und/oder kraftschlüssig gehalten ist.

Eine Erhöhung der Empfindlichkeit durch mehrfache Reflexion an der äußeren Oberfläche der Kraftfahrzeug-Scheibe wird dadurch erzielt, daß der mittlere Bereich der vorderen Oberfläche des Strahlenleitkörpers verspiegelt ausgeführt ist.

Ausführungsbeispiele werden anhand der Zeichnungen erläutert, in denen darstellen:
Fig. 1 eine erste Sensoreinrichtung im Schnitt und
Fig. 2 eine abgewandelte Sensoreinrichtung im Schnitt.

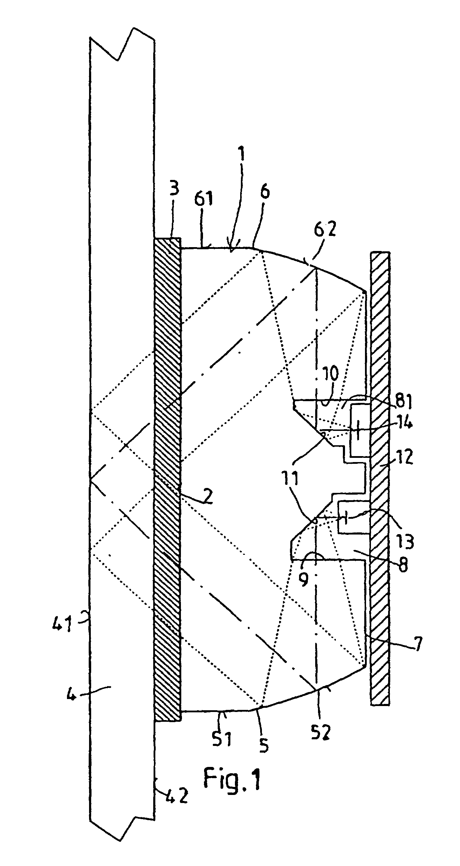

Der Strahlenleitkörpers 1 nach Fig. 1 weist eine im wensentlichen ebene vordere Oberfläche 2 oder Koppelfläche auf, die durch eine optisch transparente Schicht 3, z.B. eine Klebeschicht, mit der inneren Oberfläche 42 ein Kraftfahrzeug-Scheibe 4, z.B. der Frontscheibe eines Kraftfahrzeugs verbunden ist. Die äußere Oberfläche 41 der Scheibe 4 wird bei Regen bentzt. Der Benetzungsgrad soll gemessen werden.

An die vordere Oberfläche 2 des Strahlenleitkörpers 1 schließen im wesentlichen senkrecht ausgerichtete Seitenflächen 5 und 6 mit je einem unverspiegelten Seintenflächenabschnitt 51 bzw. 61 und einen Spiegelbereich 52, 62 an. Die Spiergelbereiche 52 und 62 sind fokussierend und parabelförmig ausgebildet, was noch in Einzelheiten erläutert wird. In der hinteren Oberfläche 7 des Strahlenleitkörpers 1, die parallel zu der Koppelfläche oder vorderen Oberfläche 2 ausgerichtete ist, sind zwei spiegelbildlich zueinander ausgebildete Ausnehmungen 8, 81 mit einem etwa trapezförmigen Querschnitt vorgesehen. Einerseits sind jeweils eine senkrecht zur hinteren Oberfläche 7 ausgerichtete Eintrittsfläche 9 bzw. Austrittnäche 10 und andererseits jeweils eine etwa unter 45° zur hinteren Oberfläche 7 ausgerichtete Grundzone 11 als Spiegelfläche vorgesehen.

Ein Substrat 12, z.B. eine metallkaschierte Leiterplatte nimmt als Strahlensender 13 eine SMD-Sendediode und als Strahlenempfänger 14 eine SMD-Empfangsdiode für Infrarotstrahlung auf. Die SMD-Sendediode 13 und die SMD-Empfangsdiode 14 sind unmittelbar in die Leiterplatte 12 integriert.

Die optische Funktion ist folgende: Der Strahlensender bzw. die Sendediode 13 sendet ein divergentes Lichtbündel aus. Die Abstrahlfläche des Strahlenbsenders 13 ist auf die Grundzone oder Spiegelfläche 11 der Ausnehmung 8 ausgerichtet und wird nach Reflexion an der Spiegelfläche 11 in die Eintrittsfläche 9 eingestrahlt. Die parabolische Spiegelfläche 61 erzeugt ein Parallelstrahlenbündel, das durch die Koppelfläche 2 hindurch unter einem Winkel von 45° in die Frontscheibe 4 eintritt.

An der äußeren Oberfläche 41 der Scheibe 4 erfolgt eine Totalreflexion. Der Reflexionsanteil ändert sich bei Benetzung der Scheibe durch Regen in Abhängigkeit von dem Benetzungsgrad. Das reflektierte Strahlenbündel wird an der parabolischen Spegelfläche 62 in ein konvergentes Strahlenbundel umgewandelt, das durch die Autrittsfläche 10 hindurch auf die Grundzone oder Spiegelfläche 11 trifft und auf die Empfangsfläche des Strahlenempfängers, d.h. der Empfangsdiode 14 fokussiert wird.

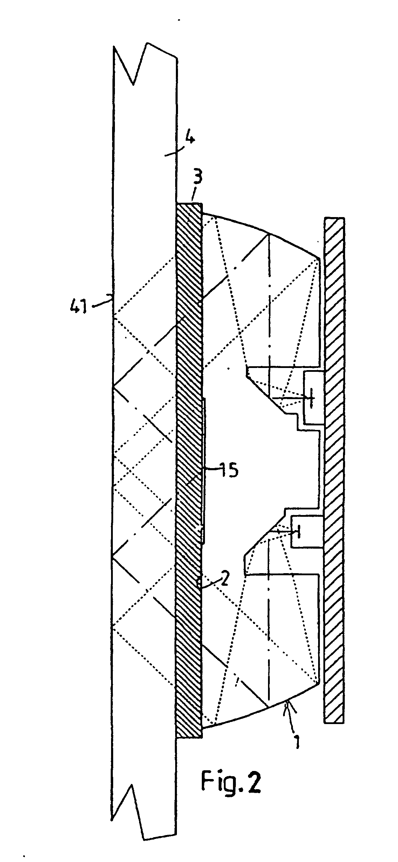

Fig. 2 zeigt einen Strahlenleitkörper mit mehrfacher Reflexion an der äußeren Oberfläche 41 der Scheibe 4, indem in einem mittleren Bereich 15 der Koppelfläche 2 eine Spiegelfläche angeordnet bzw. ausgebildet ist. Im übrigen entsprechen Aufbau und Funktion dieses Strahlenleitkörpers dem Strahlenleitkörper nach Fig. 1.

## Patentansprüche

1. Optoelektronische Sensoreinrichtung zur Erfassung des auf der äußeren Oberfläche einer transparenten Kraftfahrzeug-Scheibe vorhandenen Niederschlags, wobei an die innere Oberfläche der Scheibe ein etwa quaderförmiger Strahlenleitkörper mit seiner vorderen Oberfläche ankoppelbar ist, dem ein Strahlensender und ein Strahlenempfänger zugeordnet sind, die auf einem plattenförmigen Substrat angeordnet sind, welches sich im Bereich der von der Scheibe abgewandten hinteren Oberfläche des Strahlenleitkörpers parallel zur inneren Oberfläche der Scheibe erstreckt, **dadurch gekennzeichnet, daß** in dem Strahtenteitkörper (1) von der hinteren Oberfläche (7) desselben ausgehende Ausnehmungen (8, 81) zur Aufnahme einerseits des Strahlensenders (13) und andererseits des Strahlenempfängers (14) vorgesehen sind und daß zwei sich gegenüberliegende, zumindest partiell verspiegelte Seitenflächen (5, 6) des Strahlenleitkörpers (1) derart ausgebildet und jeweils so auf eine der Ausnehmungen (8, 81) ausgerichtet sind, daß das vom Strahlensender (13) ausgehende, über die der Ausnehmung (8) zugehörige Strahleneintrittsfläche (9) in den Strahlenleitkörper (1) eintretende divergente Strahlenbündel an dem Spiegelbereich (52) der zugehörigen Seitenfläche (5) reflektiert und parallelisiert sowie in die Scheibe (4) unter einem Winkel von etwa 45° eingekoppelt wird und daß das an der äußeren Oberfläche (41) der Scheibe reflektierte Strahlenbündel an dem Spiegelbereich (62) der anderen Seitenfläche (6) wiederum reflektiert und konvergierend über die der anderen Ausnehmung (81) zugehörige Strahlenaustrittsfläche (10) dem Strahlenempfänger zugeführt wird.

2. Sensoreinrichtung nach Anspruch 1, **dadurch gekennzeichnet, daß** die Spiegelbereiche (52, 62) der beiden Seitenflächen (5, 6) parabolförmig ausgebildet sind.

3. Sensoreinrichtung nach Anspruch 1 oder 2, **dadurch gekennzeichnet, daß** die parabolförmigen Spiegelbereiche (52, 62) sich jeweils an einen von der vorderen Oberfläche (2) des Strahlenleitkörpers (1) ausgehenden, senkrecht dazu verlaufenden Seitenflächenabschnitt (51, 61) der Seitenflächen (5, 6) anschließen und bis zu der parallel zur inneren Oberfläche (42) der Scheibe (4) verlaufenden hinteren Oberfläche (7) des Strahlenleitkörpers (1) reichen.

4. Sensoreinrichtung nach einem der Ansprüche 1 bis 3, **dadurch gekennzeichnet, daß** jeweils die in jeder Ausnehmung (8, 81) vorhandene Strahleneintrittsfläche (9) bzw. Strahlenaustrittsfläche (10) senkrecht zu der vorderen Oberfläche (2) des Strahlenleitkörpers (1) ausgerichtet sind.

5. Sensoreinrichtung nach Anspruch 4, **dadurch gekennzeichnet, daß** die Abstrahlfläche des Strahlensenders (13) bzw. die Empfangsfläche des Strahlenempfängers (14) direkt auf die jeder Ausnehmund (8, 81) zugehörige Strahleneintrittsfläche (9) bzw. Strahlenaustrittsfläche (10) ausgerichtet ist.

6. Sensoreinrichtung nach Anspruch 4 oder 5, **dadurch gekennzeichnet, daß** die Abstrahlfläche des Strahlensenders (13) bzw. die Empfangsfläche des Strahlenempfängers (14) jeweils auf eine unter einem Winkel von 45° gegenüber der betreffenden Fläche verlaufende und auch unter einem Winkel von 45° gegenüber der der jeweiligen Ausnehmung zugehörigen Strahleneintrittsfläche (9) bzw. Strahlenaustrittsfläche (10) ausgerichtete, verspiegelte Grundzone (11) der jeweiligen Ausnehmung ausgerichtet sind.

7. Sensoreinrichtung nach einem der Ansprüche 1 bis 6, **dadurch gekennzeichnet, daß** der Strahlensender (13) und der Strahlenempflinger (14) als SMD-Teile ausgeführt sind und auf dem Substrat (12) in einem auf die Ausnehmungen (8, 81) abgestimmten Verhältnis vorgesehen bzw. entsprechend angeordnet sind.

8. Senspreinrichtung nach Anspruch 7, **dadurch gekennzeichnet, daß** das Substrat (12) als metallkaschierte Leiterplatte ausgeführt ist.

9. Sensoreinrichtung nach Anspruch 8, **dadurch gekennzeichnet, daß** die Leiterplatte am Strahlengleitkörper (1) durch zugeordnete Bauelemente form- und/oder kraftschlüssig gehalten ist.

10. Sensoreinrichtung nach einem der Ansprüche 1 bis 9, **dadurch gekennzeichnet, daß** der mittlere Bereich (15) der vorderen Oberfläche (2) des Strahlenleitkörpers (1) verspiegelt ausgeführt ist.

## Claims

1. Opto-electronic sensor facility for recording the rain present on the outside surface of a transparent windscreen of a vehicle, with a roughly cube-shaped beam control element that can be coupled with its front face to the inside surface of the windscreen and a beam transmitter and a beam receiver assigned to the same, arranged on a sheet-type substrate extending parallel to the inside surface of the windscreen in the area of the face of the beam control element facing away from the windscreen, **characterized by** the fact that recesses are provided in the beam control element (1) that lead from the rear face (7) of the same and are intended for holding the beam transmitter (13) on the one hand and the beam receiver (14) on the other hand, and that two opposing and at least partially mirrored side faces (5, 6) of the beam control element (1) are designed in such a way and are each aligned to one of the recesses (8, 81) in such a way that the divergent beam cluster that is sent out by the beam transmitter (13) and enters the beam control element (1) by means of the beam incidence area (9) associating with the recess (8) is reflected and paralleled on the mirrored zone (52) of the relevant side face (5) and is coupled into the windscreen (4) at an angle of about 45° and that the beam cluster reflected in the outside surface (41) of the windscreen reflects on the other hand in the mirrored zone (62) of the other side face (6) and is conducted to the beam receiver by way of the beam emission area (10) associating with the other recess (81).

2. Sensor facility in accordance with Claim 1, **characterized by** the fact that the mirrored zones (52, 62) of the two side faces (5, 6) are of a parabolic shape.

3. Sensor facility in accordance with either of Claims 1 or 2, **characterized by** the fact that each of the parabolic mirrored zones (52, 62) is adjacent to a side face section (51, 61) of the side faces (5, 6) that lead from the front face (2) of the beam control element (1), running vertically to the same, and extend to the rear face (7) of the beam control element (1) running parallel to the inside surface (42) of the windscreen.

4. Sensor facility in accordance with any of Claims 1 to 3, **characterized by** the fact that the beam incidence area (9) or beam emission area (10), respectively, existing in either recess (8, 81) are each vertically aligned to the front face (2) of the beam control element (1).

5. Sensor facility in accordance with Claim 4, **characterized by** the fact that the radiating surface of the beam transmitter (13) or the receiving surface of the beam receiver (14), respectively, is directly aligned to the beam incidence area (9) or beam emission area (10), respectively, associating to each recess (8, 81).

6. Sensor facility in accordance with Claim 4 or Claim 5, **characterized by** the fact that the radiating surface of the beam transmitter (13) or the receiving area of the beam receiver (14), respectively, are each aligned to a mirrored main zone (11) of the respective recess that runs at an angle of 45° to the relevant surface and also at an angle of 45° to the beam incidence area (9) or beam emission area (10) associating with the respective recess.

7. Sensor facility in accordance with any of Claims 1 to 6, **characterized by** the fact that the beam transmitter (13) and the beam receiver (14) are designed as SMD components and provided, or appropriately arranged, on the substrate (12) in a relationship to coordinate with the recesses (8, 81).

8. Sensor facility in accordance with Claim 7, **characterized by** the fact that the substrate (12) is executed as a metal-clad printed circuit board.

9. Sensor facility in accordance with Claim 8, **characterized by** the fact that the printed circuit board is held on the beam control element (1) in a form-fit and/or non-positive manner by means of components assigned to the same.

10. Sensor facility in accordance with any of Claims 1 to 9, **characterized by** the fact that the central area (15) of the front face (2) of the beam control element (1 ) is of a mirrored design.

## Revendications

1. Dispositif optoélectronique pour la détection de précipitations sur la face extérieure d'une surface transparente d'un véhicule automobile, à la face intérieure de laquelle peut être couplé un corps conducteur de rayonnement qui présente approximativement la forme d'un parallélépipède et auquel sont coordonnés un émetteur de rayonnement et un récepteur de rayonnement qui sont disposés sur un substrat en forme de plaque qui s'étend, parallèlement à la surface intérieure de la glace, dans la zone de la surface arrière du corps conducteur de rayonnement, dirigée à l'opposé de la glace, **caractérisé en ce que** des évidements (8, 81) sont prévus dans le corps conducteur de rayonnement (1), à partir de la surface arrière (7) de celui-ci, pour recevoir d'une part, l'émetteur de rayonnement (13) et, d'autre part, le récepteur de rayonnement (14), et que deux surfaces latérales (5, 6) du corps conducteur de rayonnement (1), qui se font face et sont rendues, au moins partiellement, réfléchissantes, sont réalisées et dirigées chacune sur l'un des évidements (8, 81) de sorte que le faisceau divergent, en provenance de l'émetteur de rayonnement (13), pénétrant dans le corps conducteur de rayonnement (1) par la surface d'entrée (9) du faisceau associé audit évidement (8), soit réfléchi et rendue parallèle à la zone réfléchissante (52) de la surface latérale (5) associée, ainsi que couplé dans la glace (4) sous un angle d'environ 45° environ et que le faisceau, réfléchi à la surface extérieure (41) de la glace soit réfléchi à son tour sur la zone réfléchissante (62) de l'autre surface latérale (6) et conduit, convergent, au récepteur de rayonnement par la surface de sortie de rayonnement (10) associée à l'autre évidement (81).

2. Dispositif de détection selon la revendication 1, c**aractérisé en ce que** les zones réfléchissantes (52, 62) des deux surfaces latérales (5, 6) sont conçues en forme de paraboles.

3. Dispositif de détection selon la revendication 1 ou 2, **caractérisé en ce que** les zones réfléchissantes, en forme de paraboles (52, 62) sont adjacentes à un secteur (51, 61) des surfaces latérales (5, 6), qui, partant de la surface antérieure (2) du corps conducteur de rayonnement (1), s'étend perpendiculairement à celle-ci, et parviennent jusqu'à la surface postérieure (7) du corps conducteur de rayonnement (1) qui est orientée parallèlement à la surface intérieure (42) de la glace (4).

4. Dispositif de détection selon l'une des revendications 1 à 3 , **caractérisé en ce que** la surface d'entrée de rayonnement (9) et la surface de sortie de rayonnement (10), présentes dans chaque évidement (8, 81) sont orientées chacune perpendiculairement à la surface avant (2) du corps conducteur de rayonnement (1).

5. Dispositif de détection selon la revendication 4, **caractérisé en ce que** la surface émettrice de l'émetteur de rayonnement (13) resp. la surface réceptrice du récepteur de rayonnement (14) sont directement dirigées sur la surface d'entrée de rayonnement (9) resp. la surface de sortie de rayonnement (10), associées à chaque évidement (8, 81).

6. Dispositif de détection selon la revendication 4 ou 5, **caractérisé en ce que** la surface émettrice de l'émetteur de rayonnement (13) resp. la surface réceptrice du récepteur de rayonnement (14) sont dirigées chacune sur une surface de base métallisée (11) de l'évidement respectif, laquelle s'étend sous un angle de 45° par rapport à la surface concernée et est orientée, également sous un angle de 45°, par rapport à la surface d'entrée de rayonnement (9) resp. la surface de sortie de rayonnement (10), associées à chaque évidement (8, 81).

7. Dispositif de détection selon l'une des revendications 1 à 6, **caractérisé en ce que** l'émetteur de rayonnement (13) et le récepteur de rayonnement (14) sont réalisés en tant qu'organes SMD et prévus proportionnellement aux évidements (8, 81) resp. disposés adéquatement sur un substrat (12).

8. Dispositif de détection selon la revendication 7, **caractérisé en ce que** le substrat (12) est exécuté en tant que plaquette de circuits métallisée.

9. Dispositif de détection selon la revendication 8, **caractérisé en ce que** la plaquette de circuits est fixée mécaniquement au corps conducteur de rayonnement (1), par engagement géométrique et / ou par adhérence ou friction, à l'aide d'éléments associés.

10. Dispositif de détection selon l'une des revendications 1 à 9, **caractérisé en ce que** le secteur médian (15) de la surface avant (2) du corps conducteur de rayonnement (1) est métallisé.
